# NEUE EUROPÄISCHE PATENTSCHRIFT

(11) **EP 0 693 374 B2**
(45) Veröffentlichungstag und Bekanntmachung des Hinweises auf die Entscheidung über den Einspruch: **18.11.2009**
(45) Hinweis auf die Patenterteilung: 04.12.2002
(21) Anmeldenummer: 94111516.4
(22) Anmeldetag: 23.07.1994
(51) Int. Cl.: B41F 13/004

(54) **Elektrisches Antriebssystem insbesondere für Druckmaschinen**
Electric driving device, particularly for printing machines
Dispositif d'entraînement électrique en particulier pour machines à imprimer

(43) Veröffentlichungstag der Anmeldung: 24.01.1996
(60) Teilanmeldung: 99101552.0
(73) Patentinhaber: BAUMÜLLER NÜRNBERG GMBH, D-90482 Nürnberg (DE)
(72) Erfinder: Agné, Werner, D-90552 Röthenbach (DE); Götz, Fritz Rainer, D-90522 Oberasbach (DE); März, Heinrich, D-9037 Feucht (DE); Meis, Harald, D-90559 Burgthann (DE)
(74) Vertreter: Götz, Georg Alois

(56) Entgegenhaltungen:
- EP-A- 0 234 676
- EP-A- 0 396 924
- EP-A- 0 567 741
- EP-A- 0 644 048
- DE-A- 2 338 150
- DE-A- 3 138 540
- DE-A- 3 228 507
- DE-A- 3 318 250
- DE-A- 3 342 662
- DE-A- 3 707 866
- DE-A- 3 729 911
- DE-A- 3 937 330
- DE-A- 4 104 105
- DE-A- 4 137 979
- DE-A- 4 138 479
- DE-A- 4 210 988
- DE-A- 4 344 896
- DE-A- 4 344 912
- DE-A- 4 405 658
- DE-C- 4 001 120
- GB-A- 2 149 149
- US-A- 3 753 016
- US-A- 4 271 379
- US-A- 4 529 325
- US-A- 5 329 216
- HANS B.KIEF: 'NC/CNCHandbuch 93/94', 1993, CARL HANSER VERLAG, MUENCHEN WIEN, ISBN 3446174648
- H.WALCHER: 'Winkel-und Wegmessung im Maschinenbau', 1985, VDI-VERLAG, DÜSSELDORF, ISBN 3184007081
- MANNESMANN-REXROTH INDRAMAT: 'Elektronische Welle mit digitalen intelligenten Antrieben für Druckmaschinen', April 1993

## Beschreibung

Die Erfindung betrifft ein elektrisches Antriebssystem zur Verstellung von einem oder mehreren dreh- und/oder verschwenkbaren Funktionsteilen von Geräten und Maschinen, insbesondere von Druckmaschinen, gemäßerstem Teil/Oberbegriff des Anspruchs 1.

In der Patentvorveröffentlichung US-A-5 329 216 wird eine Mehrachs-Antriebsvorrichtung etwa der eingangs genannten Art beschrieben. Jeder von mehreren Achsen ist ein eigener Antriebsmotor zum synchronisierten Drehantrieb zugeordnet. Die Antriebsmotoren sind jeweils von einem eigenen Antriebsregler gesteuert, die von einer gemeinsamen Prozessorsteuerung kontrolliert werden. Dieser ist dazu mit einem Pulsgenerator versehen, der die Schnittstelle zu den Antriebsregfem bildet, die unabhängig voneinander am Pulsgenerator parallel angeschlossen sind. An den Rotoren der Antriebsmotoren ist jeweils ein Winkellagegeber angebracht, wobei der Rotor gleichzeitig die Welle der anzutreibenden Achse bzw. des Funktionsteils bildet. Dabei sind die Winkellagegeber auf derjenigen Stimseite des jeweiligen Antriebsmotors angeordnet, welche frei bzw. dem Funktionsteil abgewandt angeordnet ist. Allerdings werden damit in erster Linie Winkellagen- und geschwindigkeiten antriebsseitig vom Rotor des Antriebsmotors erfasst. Die winkellagen oder Winkelgeschwindigkeiten lastseitig vom Funktionsteil werden nur mittelbar über ein Übertragungsglied erfasst, welches durch den Wellen-Übergangsbereich zwischen dem Rotor und dem eigentlichen Funktionsteil gebildet ist. Dieses Übertragungsglied zwischen dem Rotor-Körper und dem Funktionsteil-Körper (sog. "Zweimassenschwinge") hat eine bestimmte Übertragungscharakteristik, wodurch die allein antriebsseitig vorgenommenen Winkellagemessungen den Winkellagen lastseitig direkt am Funktionsteil nicht genau entsprechen.

In der Firmenschrift "Elektronische Wellen mit digitalen intelligenten Antrieben für Druckmaschinen" (Mannesmann Rexroth Indramat HMI/04.93) ist auf Seite 11 ein Direktantrieb mit Einbaumotor und Einbau-Hohlwellenwinkelgeber gezeigt. Auch hier tastet der Winkelgeber die Winkelstellung am freien, dem walzenförmigen Funktionsteil abgewandten Ende der Rotorwelle ab. Zudem bleibt offen, ob überhaupt der Rotor und die von ihm anzutreibende Welle des Funktionsteils/der Druckmaschinenwalze einstückig ausgeführt sind. Ferner zeigt diese Firmenschrift auf Seite 10 unten die Verwendung von zwei Winkelgebem, einerseits am freien Achsstummelende des Elektromotor-Rotors und andererseits am dem Elektromotor abgewandten, freien Achsstummelende des Funktionsteils/der Druckmaschinenwalze. Dadurch soll eine Lageregelung mit gleichzeitigem Ausgleich von Getriebefehlern ermöglicht sein, welche aufgrund einer Getriebe-Verbindung zwischen Elektromotor und Funktionsteil/Druckmaschinenwalze entstehen. Auf Seite 9 der Firmenschrift wird die Empfehlung gegeben, zur Einsparung von Systemkomponenten und insbesondere separater Lagegeber antriebsinteme, hochauflösende Lagemessung zu nutzen, was allerdings mit den oben erläuterten Nachteilen verbunden ist.

Aus der Patentvorveröffentlichung DE-A-37 29 911 ist eine Gleichlauf-Regelung für Bearbeitungsstationen bekannt. Um zwischen diesen einen Synchronlauf zu erreichen, sind anstelle von Zahnradübersetzungen digital geregelte Einzelantriebe vorgesehen. Das Regelsignal wird gebildet durch Auswertung von Impulsreihen, die einerseits von Inkrementalgebem an den einzelnen Bearbeitungsstationen kommen, andererseits aus einem zentralen Leittakt/Transporteinrichtung, welche die Bearbeitungsstationen verbindet.

In der Patentvorveröffentlichung US-A-4 529 325 wird eine Regelung eines Motors und des damit gekoppelten, zu bewegenden Funktionsteils im Rahmen eines Seriendruckers beschrieben. Die Geschwindigkeit des Schlittens wird durch Zählimpulse erfaßt und zur Regelung über den Mikroprozessor verwendet. Dieser gibt dazu über einen Digital/Analog-Wandler entsprechende Stellsignale an einen Elektromotor aus, der den Schlitten entsprechend antreibt.

In der Patentvorveröffentlichung DE-A-32 28 507 ist eine Winkelmeßeinrichtung offenbart, die eine Teilscheibe zum Anbringen an die Anschlußnabe des Rotors eines Elektromotors aufweist. Das Rotieren der so direkt mit dem Rotor verbundenen Teilscheibe wird mittels einer optischen Abtasteinheit bewerkstelligt, welche am ortsfest angeordneten Stator des Elektromotors angebracht ist. Verstellmöglichkeiten für den Stator und/oder der daran angebrachten optischen Abtasteinheit sind allerdings nicht gegeben.

Nach dem sonstigen Stand der Technik sind die einzelnen Funktionseinheiten von Druckmaschinen, beispielsweise Abrollung/Rollenwechsler, Druckwerke, Druckzylinder, Trockner mit Kühlwalzen, Falzer, Querschneider, Ablage usw. durch mechanische Wellen und/oder Zahnräder miteinander verkoppelt, um deren gegenseitige Winkellageorientierung herbeizuführen. Will man diese Funktionsteile bzw. -komponenten vereinzeln und auf die mechanische Verkopplung verzichten, so sind die einzelnen Funktionsteile mit eigenen Antriebssystemen auszurüsten, die nach DE-A-41 38 479 als Direktantriebe ausgeführt sind. Zur Erzielung der notwendigen Winkellageorientierung der einzelnen Druckmaschinen-Komponenten untereinander ist eine entsprechende Synchronisation der Antriebssysteme erforderlich.

Zur Lösung der aufgezeigten Problematik wird erfindungsgemäß das in Anspruch 1 definierte, elektrische Antriebssystem vorgeschlagen.

Dabei bildet das Signalverarbeitungsmodul einen konfigurierbaren und parametrierbaren Antriebsregler, mit dem auch komplexe Regel-Algorithmen und/oder mehrere Regelkreise realisiert werden können. Mit der Erfindung ist ein Konzept für eine Vielfachsteuerung einer Mehrzahl von Drehachsen geschaffen, wobei sich das zugehörige Steuerungs- und Regelungssystem modular projektieren läßt. Beim besonderen Anwendungsfall in Druck-, insbesondere Offsetmaschinen, ist das erfindungsgemäße Antriebssystem besonders geeignet, weil damit eine hohe Qualität bzw. Genauigkeit der Winkellageorientierung, wie z. B. zwischen den Druckeinheiten, wo die Rasterpunkte verschiedener Farben in einem engen Toleranzbereich gedruckt werden müssen, erreichbar ist.

Nach einer baulichen Konkretisierung des erfindungsgemäßen Antriebssystems ist der Rotor des Elektromotors mit dem Funktionsteil, z. B. Druckzylinder, baulich integriert und/oder einstückig ausgeführt. Einerseits kann dies durch Anbau des Rotors an einem Wellenstummel des drehbaren Funktionsteiles erfolgen. Zum anderen kann es vorteilhaft sein, den im erfindungsgemäßen Antriebssystem eingesetzten Elektromotor mit einem walzen- oder zylinderförmigen Außenläufer oder -rotor auszubilden. Damit ist erreicht, daß die Form des Rotors etwa der zweckmäßig rotationssymmetrischen Form des Funktionsteiles entspricht, und insbesondere darin baulich aufgenommen sein kann.

Analog dem genannten Direktantrieb des Funktionsteiles liegt im Rahmen der Erfindung eine Direktmessung von dessen Winkellage, -geschwindigkeit, -beschleunigung usw. So ist nach der Erfindung der Winkellagegeber direkt am Funktionsteil zur unmittelbaren Messung von dessen Winkel- bzw. Dreh/Schwenkbewegungen angebracht. Vor allem im Zusammenhang mit hochauflösenden, schnellen Winkellagegebern, wie an sich bekannt, kann so eine unmittelbare und mithin äußerst wirklichkeitsgetreue Beobachtung der Regelstrecke, nämlich des zu drehenden oder schwenkenden Funktionsteiles, durchgeführt werden.

Für die Zwecke der Erfindung kommen höchstauflösende, schnelle Winkellagegeber, beispielsweise in der Ausführung als Sinus/Kosinus-Absolutgeber, als Inkrementalgeber mit Rechtecksignalen und Nullimpulssignal und als Inkrementalgeber mit Sinus/Kosinus-Signal nebst Nullimpulssignal in Frage. Um im Betrieb axiale Verstellungen des Funktionsteiles, bei Druckmaschinen beispielsweise die sogenannte Seitenregisterverstellung, zuzulassen, sind als Winkellagegeber im Sinne der Erfindung vor allem Hohlwellengeber mit eine (Zahn-) Teilung aufweisendem Geberrad und einem Geberkopf geeignet. Diese sind über einen Luftspalt voneinander radial beabstandet, und axiale Versetzungen gegeneinander innerhalb eines bestimmten Rahmens beeinträchtigen die Abtastfunktion des Geberkopfes gegenüber dem Geberrad nicht. Der mit dem Einsatz des Hohlwellengebers erzielte Vorteil besteht vor allem darin, daß das Geberrad mit dem (abzutastenden) Funktionsteil baulich integriert und/oder einstückig ausgeführt sein kann, so daß aufgrund dieser Direktverbindung eine unmittelbare Beobachtung bzw. Erfassung von dessen Winkelbewegungen gewährleistet ist.

Mit Vorteil werden beim erfindungsgemäßen Antriebssystem reaktionsschnelle Leistungsverstärker mit digitalen Phasenstromreglern verwendet. Der Umrichter kann dabei mit Spannungszwischenkreis oder mit Direkteinspeisung und damit hoher Zwischenkreisspannung ausgeführt sein (wie an sich bekannt). Mit letzterer wird eine große zeitliche Stromänderung ermöglich. Die digitale Phasenstromregelung ist für das erfindungsgemäße Antriebssystem zweckmäßig mit Pulsbreitenmodulation hoher Taktfrequenz, schnellen Transistorschaltern und Spannungsvorsteuerung ausgeführt, wobei die Phasenstromsollwerte und/oder die Vorsteuerwerte über störsichere Lichtwellenleiter-Verbindungen vorgegeben werden. Ferner ist eine Rückmeldung der Phasenstromistwerte und/oder -spannungen zur Motorführung sowie eine Vorgabe von Werten zur Konfigurierung und Parametrierung nebst Rückmeldung von Statusinformationen zur Diagnose vorteilhaft.

Damit für die Kontrolle der Schwenk- oder Drehbewegungen des Funktionsteiles eine hohe Dynamik gewährleistet ist, empfiehlt sich für das erfindungsgemäße Antriebssystem der Einsatz schneller Signalverarbeitung. Diese ist zweckmäßig strukturiert in einen digitalen Signalprozessor und einen damit gekoppelten, separat ausgeführten Achsperipheriemodul. Der Signalprozessor ist als konfigurierbarer und parametrierbarer Antriebsregler mit realisierbaren Abtastzeiten um 100µsec. (auch bei komplexen Regel-Algorithmen und mehreren Regelkreisen) sowie bei Rechenlaufzeiten im Bereich von 50µsec. erhältlich. Die Funktionen des Signalprozessors können die Geberauswertung, die Motorführung, Drehzahlregelung, Winkellageregelung, Feininterpolation der Vorgabewerte und anderes umfassen. Das Achsperipheriemodul ist zweckmäßig mit einer über Lichtwellenleiter laufenden Schnittstelle zu den digitalen Phasenstromreglern und ferner mit einer Schnittstelle zu den Winkellagegebern vorzugsweise in der Ausführung als Sinus/Kosinus-Absolutgeber, als Inkrementalgeber mit Rechtecksignalen und Nullimpulssignal und als Inkrementalgeber mit Sinus/Kosinus-Signal mit Nullimpulssignalen versehen.

Durch diese Struktur für das erfindungsgemäß eingesetzte Signalverarbeitungsmodul läßt sich durch simultane Vorgabe der Sollwerte entsprechend dem Prinzip der Lagesteuerung ein winkellageorientierter Betrieb für die relevanten Drehmassen bzw. einzelne Funktionsteile eines Gerätes oder einer Maschine, insbesondere Druckmaschine, realisieren. Dabei können im Signalverarbeitungsmodul die Sollwerte unter Beachtung der Begrenzungen im Ruck, in der Beschleunigung, in der Geschwindigkeit generiert werden. Es läßt sich insbesondere eine Aufschaltung bzw. Vorsteuerung der Winkellage-Geschwindigkeit, -beschleunigung und des -rucks herbeiführen.

Reiben mehrere Funktionsteile bei ihrer Drehung aufeinander, stellen sie über Reibschlupf verkoppelte Drehmassen dar. Bei Druckmaschinen-Zylinder bezeichnet man aufeinanderreibende, blanke Mantelabschnitte, die wegen Druck aufeinanderliegen, als sogenannte Schmitz-Ringe. Dem Problem der über Reibschlupf verkoppelten Drehmassen wird durch eine besondere Ausbildung der Erfindung begegnet, nach der das Signalverarbeitungsmodul mehrere, je einem Funktionsteil zugeordnete Regler oder Reihen mit mehreren Regelgliedern aufweist, die miteinander über zusätzliche, gewichtete Rückführungen verkoppelt sind. Zweckmäßig ist eine Kreuzverkopplung realisiert.

Beim Anwendungsfall "Druckmaschinen" tritt bei den rotierenden Druckzylindern als Störgröße der an sich bekannte "Kanalschlag" auf, der auf eine Längsrille im Zylinder zum Aufziehen eines Gummituchs oder einer Druckplatte beruht. Die an der Manteloberfläche zu Tage tretende Rille führt zu einer sich ändernden Normalkraft und damit zu einem sich ändernden Drehmoment. Diesem Phänomen des "Kanalschlags" läßt sich im Rahmen des erfindungsgemäßen Antriebssystems zweckmäßig durch Bewertung der Istwerte mit Kennliniengliedern und Störgrößenaufschaltung begegnen.

Aus dem eingangs erläuterten Stand der Technik wird ferner das Problem aufgeworfen, eine Beobachterstruktur und -methodik zu schaffen, mit der eine möglichst verlustlose und naturgetreue Messung bzw. Wiedergabe des Dreh- und/oder Schwenkverhaltens von Funktionsteilen möglich ist. Insbesondere soll eine maximale Kraftschlüssigkeit zwischen einem sich mitdrehenden Winkellagegeber und der davon beobachteten Drehmasse herrschen. Zur Lösung wird bei einer erfindungsgemäßen Anordnung eines Winkellagegebers vorgeschlagen, daß vom Winkellagegeber dessen Fühlerrotor mit dem Funktionsteil unmittelbar steif und starr verbunden, und das Abtastorgan an einer Wandung abgestützt sind, wobei eine auf das Abtastorgan einwirkende Nachführeinrichtung dergestalt ausgebildet und angeordnet ist, daß es die Verstellbewegungen des Funktionsteiles mit dem Fühlerrotor entsprechend nachvollzieht. Damit können vorteilhaft Funktionsteil-Verstellbewegungen größeren Umfangs, für die sich der Luftspalt zwischen dem Abtastorgan und dem Fühlerrotor nicht ausreichend bemessen läßt, ausgeglichen werden. Die Nachführeinrichtung wirkt nämlich so auf das Abtastorgan des Winkellagegebers ein, daß das Abtastorgan die Funktionsteil (Drehmasse)/Fühlerrotor-Verstellbewegungen, jedenfalls solange diese die Abmessungen des Luftspaltes zwischen Abtastorgan und Fühlerrotor überschreiten, nachvollzieht. Die Nachführeinrichtung kann mehrere Funktionskomponenten umfassen: eine in Achsrichtung des Fühlerrotors gegebenenfalls einschließlich des Motors/Funktionsteils gerichtete Linearführung, um beim Anwendungsfall "Druckmaschinen" das Abtastorgan an Seitenregister-Verstellungen des Zylinders als Funktionsteil anzupassen; eine bezüglich der genannten Achse radial auslenkende Exzenterführung, um beim Anwendungsfall "Druckmaschinen" das Abtastorgan auf Anstellbewegungen oder Diagonalregister-Verstellungen des Druckzylinders einzustellen, die - wie an sich bekannt - mittels exzentrischer Auslenkung der Zylinder/Motor-Drehachse herbeigeführt werden. Dabei erscheint es notwendig, daß die Funktionsteil-/Fühlerrotor- und andererseits die Abtastorgan-Exzenterführungen einander entsprechend, insbesondere zueinander kongruent, ausgebildet sind, um die Nachführung vor allem in Form sich deckender, exzentrischer Umlaufbahnen von Abtastorgan und Funktionsteil/Fühlerrotor zu gewährleisten. Die Genauigkeit der Nachführung läßt sich noch dadurch fördern, daß beide Exzenterführungen durch eine gemeinsame, lösbare, vorzugsweise mechanische Verbindungseinrichtung miteinander gekoppelt und/oder synchronisiert sind.

Um eine stationäre, steife Abstützung des Abtastorgans an dem Maschinenfundament, insbesondere Wandung einer Druckmaschine, zu erreichen, ist in weiterer Ausbildung der Erfindung eine Feststelleinrichtung vorgesehen, die mit der Nachführeinrichtung derart verbunden, insbesondere synchronisiert ist, daß sie nach Beendigung der aktiven Nachführung des Abtastorgans dieses relativ zur Wandung fixiert.

Zur axialen Linearverschiebung oder exzentrischen Auslenkung des Stators entsprechend den Funktionsteil/Fühlerrotor-Verstellbewegungen ist es zweckmäßig, eine oder mehrere, gesonderte Bewegungseinrichtungen vorzusehen: zum Beispiel einen an einer Exzenterbuchse, an die das Abtastorgan fixiert ist, angreifenden Drehantrieb oder einen Linearantrieb, der am axial verschiebbar gelagerten Abtastorgan angreift, um jeweils das Abtastorgan zur Beibehaltung eines ausreichenden Luftspalts gegenüber dem Fühlerrotor nachzuführen. Diese Nachführbewegungen lassen sich in ihrer Genauigkeit noch weiter verbessern, indem die genannten Dreh- oder Linearantriebe, die jeweils dem Abtastorgan einerseits und dem Drehmassen-/Fühlerrotor-Verbund andererseits zugeordnet sind, bei Registerverstellung oder Anstellbewegung (Einsatzfall: Druckmaschinen) miteinander gekoppelt und/oder synchronisiert sind.

Im Hinblick auf den eingangs erörterten Stand der Technik wird bei Druckmaschinen das Problem aufgeworfen, deren dreh- oder schwenkbare Funktionsteile zuverlässig beobachten und entsprechende Zustandsgrößen einem geregelten Antriebssystem zuführen zu können. Dabei sollen Verfälschungen des Meßergebnisses möglichst ausgeschlossen bzw. eine möglichst verlustlose Kopplung mit maximaler Kraftschlüssigkeit in Kraft- bzw. Drehmomentübertragungsrichtung zwischen den anzutreibenden Zylindern und dem Meßwertgeber ermöglicht sein. Zur Lösung wird bei einer Druckmaschine vorgeschlagen, daß die Zylinder zur unmittelbaren Messung ihrer Winkelgrößen mit je einem Winkellagegeber direkt verbunden sind, der ausgangsseitig an das Antriebssystem angeschlossen ist. Der Winkellagegeber bildet damit einen Direkt-Beobachter für das Funktionsteil im Rahmen einer Antriebs-Steuerungskette oder eines Antriebs-Regelkreises, der insbesondere die Umfangsregisterverstellung herbeiführt. Mit dieser Direktbeobachtung kann für jedes Funktionsteil, nämlich Zylinder- bzw. Druckwerkswalze, ein spielfreier, trägheitsarmer und mechanisch steifer Meßstrang bzw. Meßkette aufgebaut werden. Dies ergibt eine hohe Regelgenauigkeit und -dynamik, so daß sich exakte Bahnführung, konstante Bahnspannung und gleichbleibende Farbgebung über die so ermöglichte, hochpräzise Registersteuerung und Druckanstellung erreichen lassen. Die relevanten Drehmassen (beispielsweise Platten- und Gummituch-Zylinder in einem Druckwerk) werden erfindungsgemäß direkt, ohne dazwischen angeordnete Feder-, Dämpfungs-, Reibungsglieder usw., erfaßt, so daß unter Ausschluß von Elastizitäten, Nachgiebigkeiten und Spielen das Bewegungsverhalten des in der Druckmaschine zu beobachtendem Funktionsteiles originalgetreu im Regelungssystem weitergegeben werden kann. Dabei ist es zweckmäßig, auch das Abtastorgan des Winkellagegebers an einer stationären Wandung, beispielsweise der Druckmaschinenwand, elastizitäts- und spielfrei zu fixieren.

In Weiterführung dieses Gedankens ergibt sich die Notwendigkeit, daß der an einem Druckzylinder beispielsweise steif und dicht angesetzte Fühlerrotor zur Realisierung von Druck-An- und Druck-Ab-Bewegungen sowie Diagonalregister-Verstellungen exzentrisch auslenkbar sind. Dem wird mit einer vorteilhaften Ausbildung der Erfindung Rechnung getragen, wonach beim Winkellagegeber Fühlerrotor und Abtastorgan zueinander mit einem solchen Abstand angeordnet und/oder derart verstellbar ausgebildet sind, daß der von diesem begrenzte Luftspalt sich ausreichend verändern und dabei entsprechende, exzentrische Auslenkungen auffangen kann.

So können Stellbewegungen des steifen Drehmasse(Funktionsteil)/Fühlrotor-Verbunds ausgeglichen werden, obgleich das Abtastorgan an der stationären Wandung ortsfest fixiert ist. Ein zwischen dem Abtastorgan und dem Fühlrotor in der Regel vorhandener Luftspalt wird hierzu ausgenutzt. Diese Erfindungsausbildung läßt sich praktisch durch einen Hohlwellengeber realisieren, bei dem der das Geberrad bildende Fühlrotor dem Abtastorgan gegenüberliegend angeordnet ist, ohne mit letzterem über Lager oder dergleichen mechanisch verbunden zu sein.

Weitere Merkmale, Einzelheiten und Vorteile auf der Basis der Erfindung ergeben sich aus den Unteransprüchen und der nachfolgenden Beschreibung bevorzugter Ausführungsbeispiele der Erfindung. Diese zeigen in:
- Fig. 1: das Schema eines erfindungsgemäßen Direkt-Antriebsystems teilweise in Längsansicht,
- Fig. 2: im teilweisen Längsschnitt einen mit einem zu drehenden Zylinder gekoppelten Direktantrieb,
- Fig. 3: ein Blockschaltbild eines Signalverarbeitungsmoduls des erfindungsgemäßen Direktantriebs,
- Fig. 4: ein Blockschaltbild eines erfindungsgemäßen, modularen Antriebssystems zur Steuerung und Regelung einer Mehrzahl von Funktionsteile-Achsen,
- Fig. 5: das dynamische Verhalten eines Ausführungsbeispiels der Erfindung anhand eines Strukturblockschemas,
- Fig. 6: im axialen bzw. Längsschnitt die Anbringung eines Hohlwellengebers am Direktantrieb bzw. der Wandung eines Druckwerkszylinder,
- Fig.7: eine Richtungspfeil VII in Fig. 6 entsprechende Stirnansicht und
- Fig. 8: eine Richtungspfeil VIII in Figur 7 entsprechende Stirnansicht.

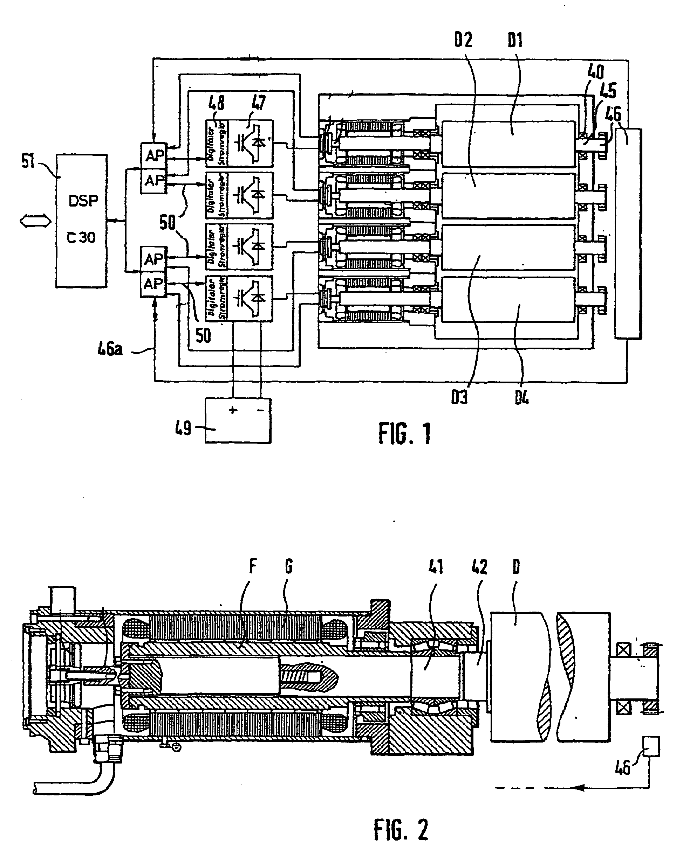

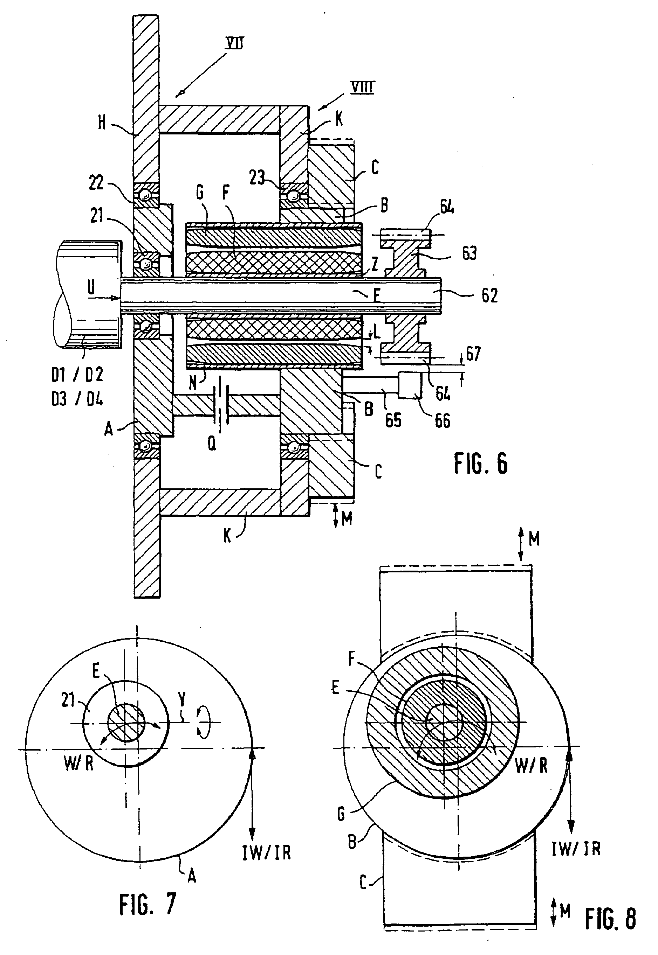

Gemäß Figur 1 besteht das Druckwerk einer Rollenoffset-Maschine aus den vier Platten- bzw. Gummituchzylindern D1, D2, D3 und D4 (schematisch dargestellt), die über Lager 40 an der ortsfesten Wandung H (vgl. Figur 6) der Maschine drehbar sind. Zu ihrer Drehung ist ihnen jeweils ein Elektromotor mit einem Rotorpaket F und einem Statorpaket G zugeordnet. Der Achsstummel 41 des Rotors F ist unmittelbar mit dem Achsstummel 42 des Zylinders D verbunden; mit anderen Worten, beide sind miteinander so baulich integriert, daß sie ineinander übergehen und dabei eine Antriebsverbindung bilden, die etwa so drehsteif wie eine einstückige Stahlwelle ist. Am den Elektromotoren F,G entgegengesetzten Ende stehen Achsstummel 45 von den Zylindern D1 - D4 vor, die je mit einem Absolut-Winkellagegeber 46 versehen sind. Die Elektromotoren F,G sind konstruktiv als Einbaumotoren ausgeführt. Sie können mit Drehstrom-Servomotoren in synchroner Bauart mit Permanentmagneten ausgeführt sein. Diese werden von einem Leistungsblock 47 jeweils mit digitalem Stromregler 48 angesteuert. Der Leistungsblock 47 wird von einer Zwischenkreis-Versorgung 49 aus mit elektrischer Energie versorgt. Die digitalen Stromregler 48 kommunizieren jeweils über störsichere Lichtwellenleiter 50 mit einem Achs-Peripheriemodul AP. Die Achs-Peripheriemodule weisen ferner jeweilige Schnittstellen 46a für je einen der auf den entgegengesetzten Wellenenden bzw.

Achsstummeln 45 an den freien Stirnseiten der Zylinder D1 - D4 befindlichen Winkellagergeber 46 auf. Die Achs-Peripheriemodule AP werden von einem gemeinsamen, digitalen Signal-Prozessor 51 kontrolliert. Dieser ist als Antriebsregler für eine maximale Anzahl von Achsen mit Lageregler, Drehzahlregler, Motorführung und Geberauswertung konfigurierbar.

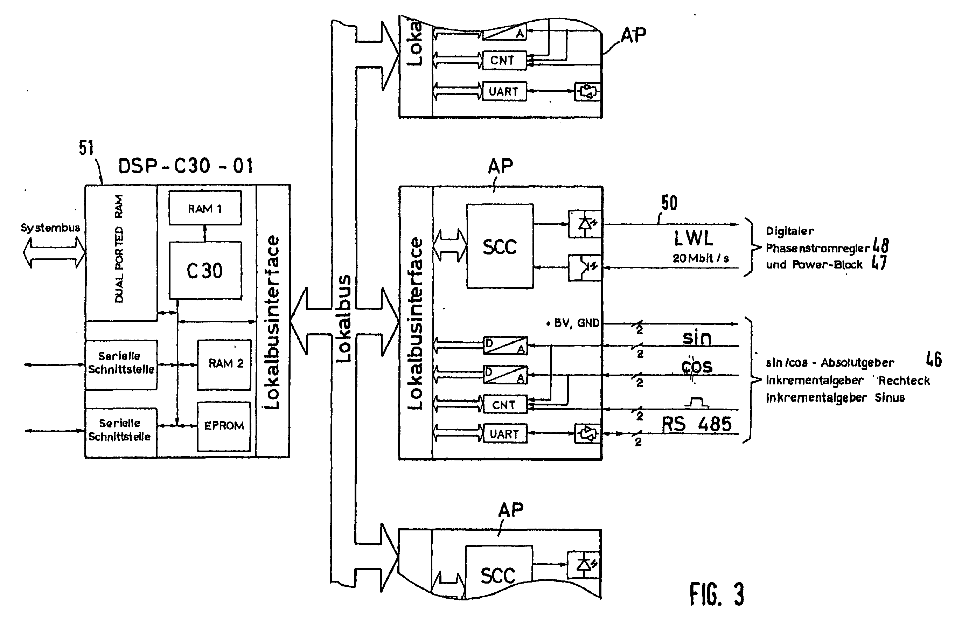

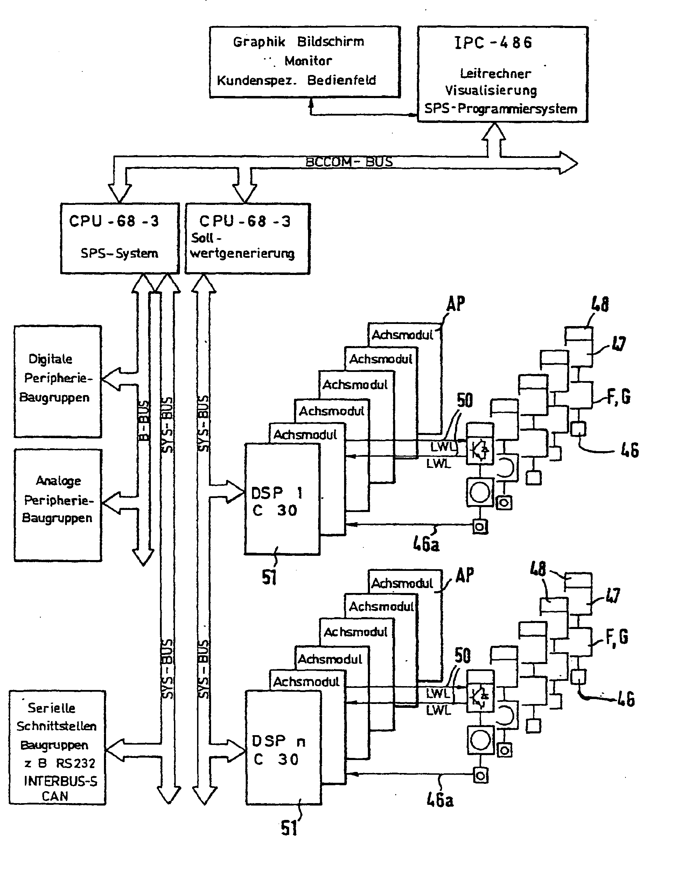

In Figur 3 ist die jeweilige interne Struktur des SignalProzessors 51 als auch der Achs-Peripheriemodule AP vergrößert dargestellt und mit dem Fachmann geläufigen Abkürzungen bezeichnet, so daß sich weitere Erläuterungen grundsätzlich erübrigen. Mit SCC ist ein sogenannter serieller Kommunikations-Steuerbaustein bezeichnet.

In Figur 4 ist die Einbindung des erfindungsgemäßen Antriebssystems gemäß Figur 1 - 3 in ein globales Konzept für eine Vielfachsteuerung mit projektierbaren, modularen Steuerungs- und Regelungseinheiten veranschaulicht. Neben einem Leitrechner IPC-486 sind Bausteine CPU-68-3 zur speicherprogrammierbaren Steuerung und zur Sollwertgenerierung vorgesehen. An diese sind die Signalprozessoren 51 über einen Systembus angekoppelt.

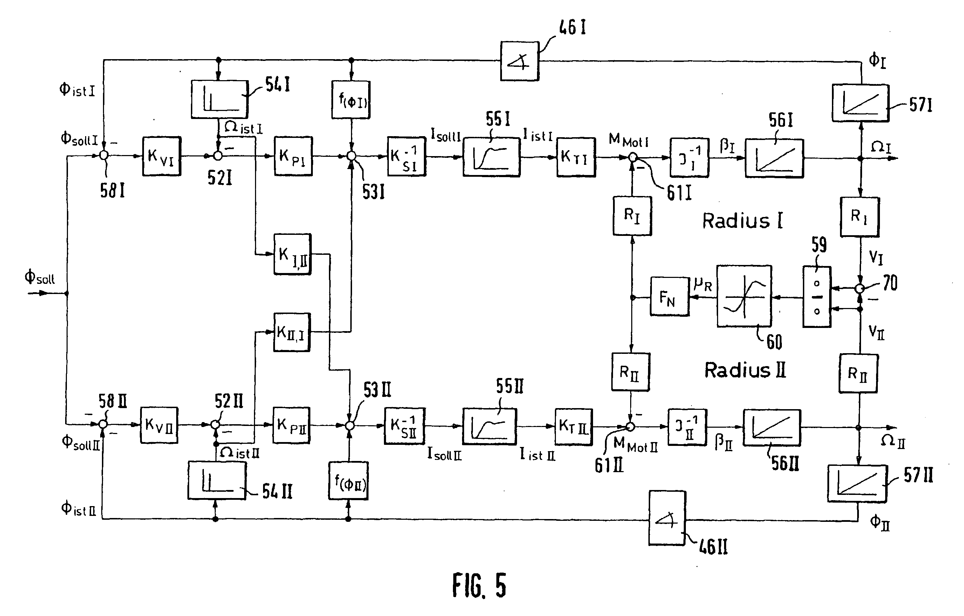

Das Blockschema gemäß Figur 5 stellt ein beispielhaftes, erfindungsgemäßes Antriebssystem für zwei über Reibschlupf (Schmitz-Ringe) verkoppelte, lagegeregelte Achsen I, II dar. Aus einer Sollwert-Generierung (beispielsweise gemäß Figur 4) werden jeder Achse I, II zu ihrer Lagesteuerung Winkellagesollwerte φ_{soll I}, φ_{soll II} vorgegeben. Nach Vergleich mit dem über die Winkellagegeber 46 jeweils erhaltenen Istwerten φ _{ist I}, φ _{ist II} wird die jeweilige Regeldifferenz einem Lageregler K_{VI}, K_{VII} zugeführt. Dessen jeweiliger Ausgangswert wird einer Differenzbildung 52I, 52II mit dem differenzierten Winkellage-Istwert, d.h. der jeweiligen Ist-Winkelgeschwindigkeit Ω_{istI}, Ω_{IstII} der Achsen I, II unterworfen. Der daraus jeweils resultierende Differenzwert wird einem Drehzahlregler K_{pI}, K_{pII} zugführt, dessen jeweiliger Ausgang auf ein Summierglied 53I, 53II trifft. Jedem dieser Summierglieder 53I, 53II ist zur Bildung einer Störgrößenaufschaltung der Ausgang eines Kennliniengliedes f(φ_{I}), f(φ_{II}) als Funktion der Winkellage φI, φII zugeführt. Demgemäß ist jedes Kennlinineglied eingangsseitig mit dem Ausgang des entsprechenden Winkellagergebers 46I, 46II verbunden. Den Summiergliedern 53I, 53II sind ferner die jeweiligen Ausgänge proportionaler Rückführungsglieder K_{I,II}, K_{II,I} zugeführt, welche kreuzweise in die Ist-Winkelgeschwindigkeit Ω Ist II bzw. Ω_{Ist I} am jeweils entsprechenden Differenzierglied 54II, 54I abgreifen. Die Eingänge der Differenzierglieder 54I, 54II sind jeweils mit dem Ausgang der entsprechenden Winkellagegeber 46I bzw. 46II verbunden. Diese Kreuzverkopplung mittels der Proportionalglieder K_{I,II} bzw. K_{II,I} wirkt auf die beispielsweise über die Schmitz-Ringe verkoppelten Regelstrecken/Achsen I bzw. II entkoppelnd.

Die jeweiligen Ausgänge der Summierglieder 53I und 53II münden direkt in jeweilige Proportionalglieder K⁻¹_{SI,} K⁻¹_{SII}, welche u.a. auf die Drehmassen der die Achsen I, II umfassenden Funktionsteile bezogene Faktoren darstellen. Danach folgen Stromregelungskreise 55I, 55II, die die eingangsseitigen Stromsollwerte I_{sollI}, I_{sollII} in Ist-Stromwerte I_{istI}, I_{istII} umwandeln. Die Stromregelkreise 55I, 55II verhalten sich nach außen näherungsweise wie in der Regelungstechnik an sich bekannte PT₂-Glieder. Die jeweiligen Ist-Stromwerte I_{istI}, I_{istII} sind Proportionalgliedern K_{TI}, K_{TII} zugeführt, welche die Elektromotor-Konstante zur Umwandlung von Strom in ein Motor-Drehmoment M_{MotI}, M_{MotII} darstellen. Nach Verknüpfung mit dem jeweiligen Proportionalglied I⁻¹_{I}, I⁻¹_{II} entsprechend der jeweiligen Drehmasse der Achse I, II und unmittelbar nachfolgender Aufintegration der Winkelbeschleunigung β_{I}, β_{II} mittels des Integrations-Gliedes 56I, 56II ergibt sich die Winkelgeschwindigkeit ΩI, ΩII, mit denen die Drehmassen/Funktionsteile um ihre jeweiligen Drehachsen I, II rotieren. Nach Integration mit einem weiteren IntegrationsGlied 57I, 57II läßt sich in Verbindung mit den jeweiligen Winkellagegebern 46I, 46II der Winkellage-Istwert φ_{istI}, φ_{istII} ermitteln und den jeweiligen Vergleichen 58I, 58II am Eingang des Blockschaltbildes gemäß Figur 5 zum Soll-Istwert-Vergleich zuführen.

Zu berücksichtigen ist noch, daß im Anwendungsfall bei Platten-/Gummizylindern eines Druckwerks einer Rollenoffset-Maschine (vgl. Figur 1) die jeweiligen Zylinder D1, D2 bzw. D3, D4 mit Schlupf aufeinander reiben, woraus ein Störmoment resultiert. Dies ist in Figur 5 im Ausgangsbereich des Blockschemas bzw. der Antriebsstruktur durch die paarweise übereinstimmenden und parallel liegenden Proportionalglieder R_{I} (entsprechend dem Halbdurchmesser bzw. Radius der die Achse I umfassenden Drehmasse) einerseits und R_{II} (entsprechend dem Radius bzw. Halbmesser, der die Achse II umfassenden Drehmasse) andererseits zum Ausdruck gebracht. Die jeweiligen Bahngeschwindigkeiten v_{I}, v_{II} der beiden Drehmassen I, II errechnen sich nach je einem ersten bzw. äußeren der beiden Proportionalglieder-Paare R_{I} bzw. R_{II}, die die jeweilgen Winkelgeschwindigkeiten ΩI, ΩII der beiden Drehmassen als Eingangsgröße haben. Die Bahngeschwindigkeiten V_{I}, V_{II} werden im Rahmen einer Differenzbildung 70 voneinander subtrahiert. Der Schlupf s ergibt sich durch den Quotienten aus dieser Differenz und einer der beiden Umfangsbahn-Geschwindigkeiten V_{I}, V_{II} der beiden Drehmassen, wie durch das Dividierglied 59 verdeutlicht. Das diesem nachfolgende Kennlinienglied 60 repräsentiert die spezifische Reibungscharakteristik beim Aufeinanderrollen von Zylinder-Mantelflächen und ergibt als Funktionswert den Reibungskoeffizienten µ_{R}. Wird diese mit der Normalkraft F_{N} entsprechend dem Anpressdruck der Zylinder aufeinander mulitpliziert, ergibt sich die störende Reibungskraft in Zylinder-Tangantial- bzw. Umfangsrichtung. Diese multipliziert mit dem jeweiligem zweiten bzw. inneren Radius-Proportionalglied R_{I} bzw. R_{II} jedes Parallel-Proportionalgliedpaares ergibt den Drehmomenteneinfluß, der jedem vom zugeordneten Antriebsmotor erzeugten Drehmoment M_{MotI} bzw. M_{MotII} aufgrund der Schlupfreibung entgegenstehend wie durch das jeder Achse I bzw. II zugeordnete Vergleichsglied 61I bzw. 61II veranschaulicht.

In den Figuren 6 - 8 ist die Nachführung des Rotors F,Z und/oder des Stators N,G des Elektromotors für die Plattenoder Gummituchzylinder D1 - D4 dargestellt, die u.a. mittels der Exzenterbuchsen A, B realisiert ist. Damit lassen sich für die Zylinder D1 - D4 Verstellbewegungen in Längsrichtung U (Verstellung der Seitenregister), in Querrichtung R (Verstellung der Diagonalregister), Anstellbewegungen W usw. realisieren. Wegen der Einzelheiten der Zylinder-Lageeinstellung wird auf die eingangs genannte Fundstelle DE-A-41 38 479 sowie auf die ältere EP-A-0621133 verwiesen. Die dort zur Beschreibung der (dortigen) Figuren 7 - 9 verwendeten Bezugszeichen sind in den vorliegenden Figuren 6 - 8 sinngemäß verwendet.

Zusätzlich ist die Zylinderwelle E mit einem sich axial erstreckenden Ansatz 62 versehen, der vom Elektromotor G,F,N,Z koaxial vorspringt und am Stirnende der Antriebswelle starr und steif fixiert und/oder damit einstückig ausgeführt ist. Auf der Umfangsfläche des Ansatzes 62 ist ein Pol- oder Geberrad 63 eines Hohlwellengebers starr bzw. ortsfest fixiert. Dieses weist an seinem äußeren Rand radial vorspringende Zähne 64 auf, die in Umfangsrichtung gemäß einer bestimmten Teilung beabstandet aneinandergereiht sind. An der nach außen gewandten Stirnseite der den Stator G,N umfassenden Exzenterbuchse B ist ein parallel zur Drehachse vorspringender Befestigungsschaft 65 fixiert, der an seinem freien Ende den Geberkopf 66 des Hohlwellengebers trägt. Dieser ist mit einem bezüglich der Geberrad-Drehachse verlaufenden Abstand 67 zu den Zähnen 64 des Geberrads 63 angeordnet. Der Abstand 67 ist so bemessen, daß einerseits die Wirkungsverbindung von dem Geberkopf und der Zähne 64 auf dem Geberrad 63 zustandekommen kann und andererseits in bestimmtem Umfang Axialversetzungen zwischen dem Geberkopf 66 und dem Geberrad 63 möglich sind, ohne daß die Funktionsfähigkeit dieser Wirkungsverbindung beeinträchtigt wird. Außerdem sind das Geberrad 63 und/oder dessen Zähne 64 dazu ausreichend breit ausgeführt. Auch eine mittige Anordnung des Geberkopfs 66 gegenüber den Zähnen ist hierzu vorteilhaft.

Die Erfindung beschränkt sich gegenüber dem in Figuren 6 - 8 dargestellten, vergleichenden Ausführungsbeispiel darauf, daß der vom Geberrad 63 umgebene Ansatz direkt an der Stirnseite eines der Zylinder D1 - D4 angebracht ist und/oder der Befestigungsschaft 65 direkt an der Wandung H der Druckmaschine fixiert ist, während der Elektromotor F,G beispielsweise an der anderen Stirnseite des Zylinders D1 - D4 angreift, wie in Figur 1 angedeutet.

## Patentansprüche

1. Elektrisches Antriebssystem zur Verstellung von mehreren dreh- und/oder verschwenkbaren Funktionsteilen (D1-D4) von Geräten und Maschinen, insbesondere von Druckmaschinen, in ihrer Winkellage (φistI, φistII), mit mehreren Elektromotoren (F, G), deren jeweiliger Rotor (F) zur steifen und direkten Verbindung mit dem Funktionsteil (D1-D4) ausgebildet ist, mit mehreren Winkellagegebern (46), die Winkelbewegungen des jeweiligen Funktionsteiles (D1-D4) aufnehmen, mit einem Signalverarbeitungsmodul (51, AP), das eingangsseitig zur Aufnahme der Winkellagesignale (φistI, φistII) als Istwerte mit den Winkellagegebern (46) verbunden ist und mehrere, je einem Funktionsteil (D1-D4; I, II) zugeordnete Regler oder Reihen mit mehreren Regelgliedern aufweist, die zur simultanen Aufnahme von je einem Funktionsteil (D1-D4; I, II) zugeordneten Sollwerten (φsoll) und zu deren Vergleich mit den Istwerten ausgebildet sind, und mit mehreren, vom Signalverarbeitungsmodul (51, AP) kontrollierten Leistungsverstärkern (47, 48), die ausgangsseitig mit dem jeweiligen Elektromotor (F, G) zu dessen Ansteuerung verbunden sind, wobei jeweils ein einziger Winkellagegeber (46) dem Elektromotor (F, G) zugeordnet ist,
**dadurch gekennzeichnet, dass**
der Winkellagegeber (46) am Funktionsteil (D1-D4) auf dessen dem Elektromotor gegenüberliegender und freier Stirnseite über einen Achsstummel (45), ein Wellenende oder einen Ansatz (62) oder ein vom Geberrad (63) eines als Hohlwellengeber ausgeführten Winkellagegebers umgebener Ansatz (62) direkt an einer Stirnseite eines als Druckzylinder ausgeführten Funktionsteils (D1-D4) zur unmittelbaren Aufnahme von dessen Winkelbewegungen (φistI, φistII) angebracht sind.

2. Antriebssystem nach Anspruch 1, **dadurch gekennzeichnet, daß** der Rotor (F) mit dem Funktionsteil (D1 - D4) baulich integriert und/oder einstückig ausgeführt ist.

3. Antriebssystem nach Anspruch 1 oder 2, **dadurch gekennzeichnet, daß** der Elektromotor (F, G) zum Anbau an einem Wellenstummel eines drehbaren Funktionsteiles (D1 - D4) ausgebildet ist.

4. Antriebssystem nach Anspruch 1 oder 2, **dadurch gekennzeichnet, daß** der Elektromotor mit einem walzen- oder zylinderförmigen Außenläufer oder - rotor gebildet ist, dessen Form der des Funktionsteiles entspricht, insbesondere zur Aufnahme darin ausgeführt ist.

5. Antriebssystem nach einem der vorangehenden Ansprüche, **dadurch gekennzeichnet, daß** der Winkellagegeber als Sinus/Cosinus-Absolutgeber, Inkrementalgeber mit Rechtecksignalen und Nullimpulssignal, als Inkrementalgeber mit Sinus/Cosinus-Signal nebst Nullimpulssignal oder als Hohlwellengeber mit Geberkopf (66) und die Winkelteilung aufweisendem Geberrad (63) ausgeführt ist.

6. Antriebssystem nach Anspruch 5, **dadurch gekennzeichnet, daß** das Geberrad (63) mit dem Funktionsteil (D1 - D4) baulich integriert und/oder einstükkig ausgeführt ist.

7. Antriebssystem nach Anspruch 5 oder 6, **dadurch gekennzeichnet, daß** der Geberkopf (66) und das Geberrad (63) entsprechend der Dreh- oder Schwenkachse des Funktionsteiles (D1 - D4) axial gegeneinander verschiebbar sind.

8. Antriebssystem nach einem der vorangehenden Ansprüche, **dadurch gekennzeichnet, daß** der Leistungsverstärker (47) mit Umrichter mit Spannungszwischenkreis (49) und/oder mit Direkteinspeisung ausgeführt ist.

9. Antriebssystem nach einem der vorangehenden Ansprüche, **dadurch gekennzeichnet, daß** der Leistungsverstärker (47) mit digitaler Phasenstromregelung (48) auf der Basis von Pulsbreitenmodulation hoher Taktfrequenz, schneller Transistorschalter, Spannungsvorsteuerung und/oder Vorgabe der Phasenstromsoltwerte und/oder der Vorsteuerwerte über Lichtwellenleiter-Verbindungen (50) realisiert ist.

10. Antriebssystem nach einem der vorangehenden Ansprüche, **dadurch gekennzeichnet, daß** im Signalverarbeitungsmodul (51, AP) ein digitaler Signalprozessor (51) angeordnet ist, mit dem Funktionen zur Geberauswertung, Motorsteuerung, Drehzahlregelung, Winkellageregelung und/oder Feininterpolation der Soll- oder Vorgabewerte implementiert sind.

11. Antriebssystem nach einem der vorangehenden Ansprüche, **dadurch gekennzeichnet, daß** das Signalverarbeitungsmodul (51, AP) mehrere, je einem Funktionsteil zugeordnete Regler oder Reihen mit mehreren Regelgliedern aufweist, die miteinander über zusätzliche, gewichtete Rückführungen (KI,II, KII,I), vorzugsweise über Kreuz, verkoppelt sind.

12. Antriebssystem nach einem der vorangehenden Ansprüche, **dadurch gekennzeichnet, daß** das Signalverarbeitungsmodul (51, AP) einen oder mehrere Regler und/oder eine oder mehrere Reihen von Regelgliedem aufweist, die mit einem eingangsseitig Istwerte (φistI, φistII) aufnehmenden Kennlinienglied zur Störgrößenaufschaltung (53I, 53II) verknüpft sind.

## Claims

1. Electric driving system for adjusting a plurality of rotatable and/or pivotable functional parts (D1 - D4) of appliances and machines, in particular of printing machines, in their angular position (φistI, φistII), with a plurality of electric motors (F, G), the respective rotor (F) of which is formed for rigid and direct connection to the functional part (D1 - D4), with a plurality of angular position encoders (46), which register angular movements of the respective functional part (D1 - D4), with a signal processing module (51, AP), which is connected on the input side to the angular position encoders (46) to register the angular position signals (φistI, φistII) as actual values and comprises a plurality of regulators or rows with a plurality of regulating elements, which are associated with a respective functional part (D1 - D4; I, II) and are formed to simultaneously register desired values (φsoll) associated with a respective functional part (D1 - D4; I, II) and to compare them with the actual values, and with a plurality of power amplifiers (47, 48), which are controlled by the signal processing module (51, AP) and are connected on the output side to the respective electric motor (F, G) to activate the latter, wherein a single angular position encoder (46) is in each case associated with the electric motor (F, G),
**characterised in that**
the angular position encoder (46) is attached to the functional part (D1 - D4) at the free front side of the latter which lies opposite the electric motor via an axle stub (45), a shaft end or a projection (62), or a projection (62), which is surrounded by the encoder wheel (63) of an angular position encoder, which is constructed as a hollow shaft encoder, is attached directly to a front side of a functional part (D1 - D4), which is constructed as a printing cylinder, to directly register the angular movements (φistI, φistII) thereof.

2. Driving system according to Claim 1, **characterised in that** the rotor (F) is structurally integrated and/or integral with the functional part (D1 - D4).

3. Driving system according to Claim 1 or 2, **characterised in that** the electric motor (F, G) is formed for attachment to a shaft stub of a rotatable functional part (D1 - D4).

4. Driving system according to Claim 1 or 2, **characterised in that** the electric motor is formed with a roll-shaped or cylindrical external rotor, the shape of which corresponds to that of the functional part, being in particular constructed to be held therein.

5. Driving system according to any one of the preceding Claims, **characterised in that** the angular position encoder is constructed as a sine/cosine absolute encoder, incremental encoder with square-wave signals and zero pulse signal, as an incremental encoder with sine/cosine signal together with zero pulse signal or as a hollow shaft encoder with encoder head (66) and encoder wheel (63) having angular division.

6. Driving system according to Claim 5, **characterised in that** the encoder wheel (63) is structurally integrated and/or integral with the functional part (D1 - D4).

7. Driving system according to Claim 5 or 6, **characterised in that** the encoder head (66) and the encoder wheel (63) can be axially displaced with respect to one another according to the rotational or pivot axis of the functional part (D1 - D4).

8. Driving system according to any one of the preceding Claims, **characterised in that** the power amplifier (47) is constructed with a converter with intermediate voltage circuit (49) and/or with direct feed.

9. Driving system according to any one of the preceding Claims, **characterised in that** the power amplifier (47) is implemented with digital phase current regulation (48) on the basis of pulse-width modulation with high clock frequency, high-speed transistor switches, voltage precontrol and/or predetermination of the phase current desired values and/or the precontrol values via optical-fibre links (50).

10. Driving system according to any one of the preceding Claims, **characterised in that** a digital signal processor (51) is disposed in the signal processing module (51, AP) for implementing functions relating to encoder evaluation, motor control, rotational speed regulation, angular position regulation and/or fine interpolation of the desired or predetermined values.

11. Driving system according to any one of the preceding Claims, **characterised in that** the signal processing module (51, AP) comprises a plurality of regulators or rows with a plurality of regulating elements, which are associated with a respective functional part and are coupled together via additional, weighted feedbacks elements (KI, II, KII, I), preferably crosswise.

12. Driving system according to any one of the preceding Claims, **characterised in that** the signal processing module (51, AP) comprises one or a plurality of regulator(s) and/or one or a plurality of row(s) of regulating elements, which are linked to a characteristic element, which registers actual values (φistI, φistII) on the input side, for feedforward control (53I, 53II).

## Revendications

1. Système d'entraînement électrique pour déplacer plusieurs pièces fonctionnelles (D1-D4), pouvant tourner et/ou pivoter, d'appareils et de machines, notamment de machines d'impression, dans leur position angulaire (ØistI, ØistII), comportant plusieurs moteurs électriques (F, G), dont le rotor respectif (F) est agencé de manière à établir une liaison rigide et directe avec la partie fonctionnelle respective (D1-D4) ; comportant plusieurs transmetteurs de position angulaire (46), qui enregistrent des déplacements angulaires de la pièce fonctionnelle respective (D1-D4) ; un module (51, AP) de traitement de signaux, qui est relié côté entrée au transmetteur de position angulaire (46) pour l'enregistrement des signaux de position angulaire (φistI, φistII) en tant que valeurs réelles et comprend plusieurs régulateurs associés chacun à une pièce fonctionnelle (D1-D4 ; I ; II) ou à des rangées comportant plusieurs organes de réglage, qui sont agencés pour réaliser l'enregistrement simultané de valeurs de consigne (φsoll) associées à des pièces fonctionnelles respectives (D1-D4) et pour la comparaison aux valeurs réelles ; plusieurs amplificateurs de puissance (47, 48), qui sont commandés par le module (51, AP) de traitement de signaux et qui sont reliés côté sortie au moteur électrique respectif (F, G) pour la commande de ce dernier, un seul transmetteur de position angulaire respectif (46) étant associé à chaque moteur (F, G), **caractérisé en ce que** le transmetteur de position angulaire (46), situé sur la pièce fonctionnelle (D1-D4), est monté sur sa face libre et opposée au moteur électrique, par l'intermédiaire d'un tronçon d'axe (45), d'une extrémité d'arbre ou d'un embout (62), ou un embout (62) entouré par la roue (63) d'un transmetteur de position angulaire agencé sous la forme d'un transmetteur à arbre creux est monté directement sur une face frontale d'une pièce fonctionnelle (D1-D4) réalisées sous forme d'un cylindre d'impression pour enregistrer directement les déplacements angulaires (φistI, φistII) de cette pièce.

2. Système d'entraînement selon la revendication 1, **caractérisé en ce que** le rotor (F) est intégré du point de vue construction à la pièce fonctionnelle (D1-D4) et/ou y est raccordé d'un seul tenant.

3. Système d'entraînement selon la revendication 1 ou 2, **caractérisé en ce que** le moteur électrique (F, G) est conçu pour être monté sur un bout d'arbre d'une pièce fonctionnelle rotative (D1-D4).

4. Système d'entraînement selon la revendication 1 ou 2, **caractérisé en ce que** le moteur électrique est réalisé avec un rotor extérieur en forme de rouleau ou de forme cylindrique, dont la forme correspond à celle de la pièce fonctionnelle, et notamment est agencé pour être logé dans cette pièce.

5. Système d'entraînement selon l'une des revendications précédentes, **caractérisé en ce que** le transmetteur de position angulaire est réalisé sous la forme d'un transmetteur de valeurs absolues de sinus/cosinus, un générateur incrémental comportant des signaux rectangulaires et un signal impulsionnel de zéro, sous la forme d'un transmetteur incrémental avec un signal sinus/cosinus en plus d'un signal impulsionnel de zéro ou bien sous la forme d'un transmetteur à arbre creux comportant une tête de transmission (66) et une roue de transmetteur (63) comportant la division angulaire.

6. Système d'entraînement selon la revendication 5, **caractérisé en ce que** la roue de transmetteur (63) est intégrée du point de vue construction dans la pièce fonctionnelle (D1-D4) et/ou est agencée d'un seul tenant.

7. Système d'entraînement selon la revendication 5 ou 6, **caractérisé en ce que** la tête de transmetteur (66) et la roue de transmetteur (63) sont déplaçables axialement l'une par rapport à l'autre conformément à l'axe de rotation ou de pivotement de la pièce fonctionnelle (D1-D4).

8. Système d'entraînement selon l'une des revendications précédentes, **caractérisé en ce que** l'amplificateur de puissance (47) est réalisé avec un convertisseur statique comportant un circuit intermédiaire de tension (49) et/ou une alimentation directe.

9. Système d'entraînement selon l'une des revendications précédentes, **caractérisé en ce que** l'amplificateur de puissance (47) est réalisé avec une unité de régulation du courant de phase (48) sur la base d'une modulation d'impulsions en durée avec une fréquence élevée de cadence, un commutateur rapide à transistor, une unité de commande pilote de tension et/ou la prédétermination des valeurs de consigne du courant de phase et/ou des valeurs de commande pilotes au moyen de liaisons (35) formées de guides d'ondes optiques.

10. Système d'entraînement selon l'une des revendications précédentes, **caractérisé en ce que** dans le module (51, AP) de traitement des signaux est installé un processeur de signaux numériques (51), au moyen duquel les fonctions d'évaluation de transmetteur, de commande du moteur, de régulation de la vitesse de rotation, de régulation de la position angulaire et/ou d'interpolation précise des valeurs de consigne ou de prédétermination sont réalisées.

11. Système d'entraînement selon l'une des revendications précédentes, **caractérisé en ce que** le module (51, AP) de traitement de signaux comporte plusieurs régulateurs associés respectivement à chaque pièce fonctionnelle ou des rangées comportant plusieurs organes de régulation et qui sont couplées entre elles par l'intermédiaire d'unités de renvoi supplémentaires pondérées (KI,II,KII,I), de préférence en croix.

12. Système d'entraînement selon l'une des revendications précédentes, **caractérisé en ce que** le module (51, AP) de traitement de signaux comporte un ou plusieurs régulateurs et/ou une ou plusieurs rangées d'organes de réglage, qui sont combinées à un organe à courbe caractéristique, qui enregistre des valeurs réelles (φistI, φistII) côté entrée, pour l'application (53I,53II) de grandeurs perturbatrices.
